# EUROPEAN PATENT SPECIFICATION

(11) **EP 2 350 401 B1**
(45) Date of publication and mention of the grant of the patent: **11.07.2018**
(21) Application number: 09812468.8
(22) Date of filing: 29.10.2009
(51) Int. Cl.: E03F 5/02, E03F 5/04

(54) **PLASTIC DRAIN OR INSPECTION CHAMBER PORTION WITH HOLLOW-WALLED SECTION AND CORRESPONDING MOULD ASSEMBLY FOR THE FABRICATION THEREOF**
KUNSTSTOFFABLFUSS- ODER INSPEKTIONSKAMMERTEIL MIT HOHLWANDIGER UMFANGSWAND SOWIE FORMANORDNUNG DAFÜR
CANALISATION D'ÉVACUATION EN PLASTIQUE OU PARTIE DE CHAMBRE DE VISITE AYANT UNE PAROI CIRCONFÉRENTIELLE CREUSE ET ENSEMBLE MOULE PERMETTANT LEUR FABRICATION

(30) Priority: 29.10.2008 NL 1036127; 24.07.2009 NL 1037148
(43) Date of publication of application: 03.08.2011
(73) Proprietor: Wavin B.V., 8011 CW Zwolle (NL)
(72) Inventor: VAN DIJK, Berend Jan, NL-7777 ST Schuinesloot (NL); JAGER, Harm Jantinus Marcel, NL-7676 AG Westerhaar-Vriezenveensewijk (NL); BRÜMMER, Günter Bernhard, 49740 Haselünne (DE); ELZINK, Willem Johan, NL-7701 LD Dedemsvaart (NL); MADSEN, Frede, DK-8450 Hammel (DK); ALFERINK, Franciscus Johannes Maria, NL-8106 AE Marienheem (NL)
(74) Representative: Hoffmann Eitle
(86) International application number: PCT/IB2009/056038
(87) International publication number: WO 2010/049920

(56) References cited:
- EP-A- 0 310 488
- EP-A- 1 281 499
- DE-A1- 19 604 051
- GB-A- 1 058 586

## Description

The invention relates to a drain manufactured from plastic.

Such drains are known. Among other things, they are applied as gully hole or inspection chamber (or portion thereof), in, for example, a sewage or drainage system. Usually, the known drains comprise a bottom and a circumferential wall surrounding this bottom, provided with openings for connection of the drain to one or more pipes of the sewage or drainage system concerned. With its open top side, the drain can be connected to a sealing drain cover or to a (or another) portion of an inspection chamber such as an extending shaft or a transition part. The invention also relates to said inspection chamber portions.

Such inspection chamber portions, such as drains, shafts, or transition parts, can be manufactured by rotation moulding, for example. Rotation moulding offers the advantage that it is possible to work with a relatively light and thereby cheap mould assembly, because the occurring process pressures are relatively low, at least in comparison with other moulding methods. Due to this, rotation moulding is already profitable with relatively small series of products. A further advantage is that with rotation moulding, drains or inspection chamber portions which are at least partly hollow-walled can be formed. Due to this, material can be saved. Such device having the features of the preamble of claim 1, is known from DE19604051A.

A disadvantage of such drains or inspection chamber portions is that the hollow-walled parts can deform easily under the influence of forces acting thereon in use. This is especially disadvantageous when those portions need to connect to external components in use, such as a drain cover or a pipe, for example, or to another inspection chamber portion. As a result of the deformation, it is not possible to realise a proper connection and/or a realised connection may leak.

It is an object of the invention to provide a drain or a portion of an inspection chamber, provided with a circumferential wall having a hollow-walled section, wherein the problems of the known drains or inspection chamber portions are eliminated or at least reduced.

To that end, a drain or inspection chamber portion according to the invention is characterised in that an internal wall and an external wall of the hollow-walled section are locally abutted or connected to each other for formation of reinforcements. These reinforcements are arranged such that they jointly span the entire hollow-walled section in circumferential direction, yet without forming therewith a continuous abutment or connection between the internal wall and the external wall.

By arranging the individual reinforcements such that they jointly span the hollow-walled section entirely or almost entirely, seen in circumferential direction, optimal reinforcement is provided, as if a single continuous reinforcement were provided. Due to this, a very effective reinforcement can be realised in which the hollow-walled section, especially the internal and external wall thereof, will not or hardly deform under the influence of forces acting thereon in use. At the same time, the discontinuous arrangement of the reinforcements enables manufacturing of the drain or the inspection chamber portion in a mould cavity, because of the fact that all parts of the mould cavity remain well accessible to be filled with plastic, also those parts which are located behind or downstream with respect to the reinforcements, seen in filling direction.

The reinforcements can be designed in various ways. For example, they can have an elongated shape, wherein a longitudinal axis preferably extends in circumferential direction of the drain or the inspection chamber portion. The reinforcements can also have mutually different shapes and/or dimensions, wherein, for example, elongated reinforcements are alternated by relatively short reinforcements. This can offer advantage in view of the releasability of the mould parts with which the reinforcements concerned are realised, for example.

According to an aspect of the invention, the reinforcements can be arranged in two or more rows extending along the drain or the inspection chamber portion in circumferential direction. The reinforcements in the one row can be offset with respect to the reinforcements in an adjacent row. The reinforcements in adjacent rows can partly overlap each other, seen in circumferential direction, but this is not necessary. By distributing the reinforcements among a number of rows, the circumferential wall can be reinforced along a certain axial length. For example, this is advantageous when it is not exactly pre-determined which part of the circumferential wall is going to provide for connection to an external component or another inspection chamber portion. When, for example, use is made of a sealing element between the circumferential wall of the drain or the inspection chamber portion and said external component, the position of this sealing element can be shifted along a certain axial distance.

According to an aspect of the invention, the hollow-walled section can extend along a part of the circumference, for example, around one or more openings in the circumferential wall. Besides, or alternatively, the hollow-walled section can extend around the entire circumference of the drain or inspection chamber. In that case, the reinforcements, seen in circumferential direction, will also jointly enclose the entire circumference, which is advantageous to the resistance to deformation of the hollow-walled section and thus of the drain or the inspection chamber portion in its entirety, especially in respect of radial loads. Naturally, the drain or the inspection chamber portion can comprise several hollow-walled sections.

The or each hollow-walled section preferably extends around a coupling part of the drain or the inspection chamber portion, such as a spigot end or a socket end, with which the drain or the inspection chamber portion can be coupled to an external component in use, such as a pipe, for example, or to another inspection chamber portion, such as a shaft and/or a transition portion, for example. Due to this, the coupling parts will not or hardly deform under the influence of external forces, as a result of which they can connect well to the external components.

According to an advantageous aspect of the invention, a hollow-walled coupling part can be realised as socket end. For the purpose of the proper functioning of such a socket end, it is important that it has an accurately manufactured internal dimension. The external dimension is of less importance. In moulding, for example, rotation moulding of an inspection chamber portion, such as a drain, it is the internal dimension of the socket end which can be accurately controlled. This is caused by the fact that the moulded inspection chamber portion will inevitably shrink during cooling. In the process, the external surface of the socket end will shrink away from the mould wall, yet it is the internal surface which will shrink in the direction of the mould wall. Hence, the external surface can freely shrink to a certain extent, as a result of which the final external dimension can vary through a certain range. On the other hand, the internal surface is hindered in its shrinking process by the mould wall, and will exactly assume the contours of this mould wall. Due to this, since these contours can be manufactured.very accurately, the internal dimension of the socket end can also be accurately controlled. Due to this, the socket end will be able to snugly abut against a spigot end inserted therein.

Furthermore, the invention relates to a mould assembly for manufacturing a drain or an inspection chamber portion according to the invention. The mould assembly comprises an external mould and an internal mould, which, in an assembled condition, define a forming cavity for forming the drain or the inspection chamber portion therein. At the location of the hollow-walled section to be formed, this forming cavity is provided with local constrictions, where the distance between the external mould and the internal mould is so small that an external wall formed against the external mould and an internal wall formed against the internal mould contact each other at the location and fuse with each other for formation of a reinforcement. Besides, the constrictions are arranged such that they jointly span the entire hollow-walled section to be formed, in circumferential direction, yet without forming therewith a continuous constriction between the external mould and the internal mould. Thus, the hollow-walled section can be reinforced in an effective way, while the forming cavity still continuously remains well fillable, at least is not prematurely sealed by moulding material accumulating in the constrictions. For example, the constrictions can be realised by locally deforming the internal mould and/or the external mould inward, or providing the internal mould and/or the external mould with local thickenings or bulges.

Further advantageous embodiments of a drain or inspection chamber portion according to the invention as well as a mould assembly for manufacturing thereof are described in the further subclaims.

For sake of clarification, examples of embodiments of an inspection chamber portion, especially a drain, and a mould assembly according to the invention will be explained in more detail on the basis of the drawing. In the drawing:
FIG. 1 shows an inspection chamber, provided with a drain according to the invention, in exploded, perspective view;
FIG. 2 shows the drain from Figure 1, in sectional perspective view;
FIG. 3 shows the hollow-walled section of the drain from Figure 1 and 2 in further detail;
FIG. 4 diagrammatically shows a mould assembly according to the invention, for making the drain from Figure 1 and 2, in cross-sections;
FIG. 5 diagrammatically shows a part of a possible embodiment of an external mould, in perspective view; and
FIG. 6 diagrammatically shows an alternative embodiment of an external mould according to the invention, in top view.

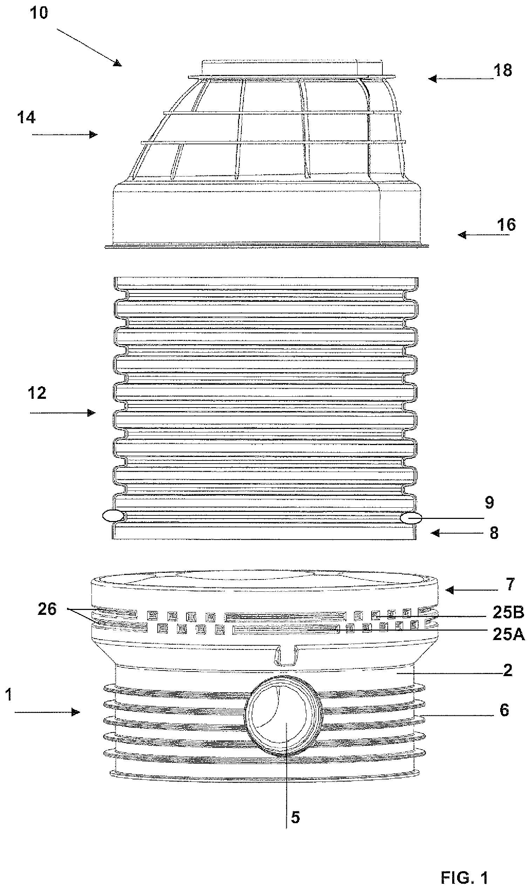

Figures 1-3 show an example of an embodiment of a drain 1 according to the invention, which can be part of an inspection chamber 10 as shown in Figure 1. The inspection chamber 10 further comprises a shaft 12 and a transition part 14.

The shaft 12 is intended to adapt the height of the inspection chamber 10 to an intended overall depth. The shaft 12 comprises a substantially cylinder-shaped body which can be connected to the drain 1 through suitable coupling means, such as a spigot and socket joint, for example. In the shown example of an embodiment, the drain 1 is provided with a socket end 7, and the shaft 12 is provided with a spigot end 8. In an alternative embodiment, the drain 1 can be provided with a spigot end, and the shaft with a matching socket end. Between the socket end 7 and the spigot end 8, sealing means can be provided, such as one or more elastic sealing rings 9, for example, for establishing a water-tight connection. In the shown example of an embodiment, the shaft 12 has a corrugated circumferential wall. Naturally, other embodiments are possible. For instance, the circumferential wall can be provided with ribs. Also, the corrugations can have another profile than shown.

The transition portion 14 is adapted to span possible diameter differences between the shaft 12 and a provision for access. To that end, the transition portion 14 comprises a first end 16 which is fittingly connectable to the shaft 12, and a second end 18 with a smaller diameter, which is fittingly connectable to said provision for access. Again, for the purpose of connecting, use can be made of a spigot and socket joint (as shown), or other coupling means known per se. The transition part 14 can have a conical, curved, stepped or otherwise tapered shape between said first and second end 16, 18.

The drain 1 comprises a circumferential wall 2 with openings 5 for connection to one or more pipes of, for example, a sewage system or a drainage system (not shown). To that end, the openings 5 can be provided with connecting sleeves (not shown), which can be integrally formed along, or be manufactured as separate components. The number of openings 5 can differ per application, as well as the mutual location of these openings 5 and/or their respective diameters. The drain 1 further comprises a bottom 3, which can be provided with a flow section 4 connecting to the openings 5, which can have the shape of a channel, for example. The bottom 3 can also be integrally formed along, or be manufactured as separate component. The drain 1 can further be provided with reinforcing ribs 6, which can extend along at least a part of the external circumference of the circumferential wall 2, as shown. At a side facing away from the bottom 3, the circumferential wall 2 is provided with a socket end 7 for receipt of earlier-mentioned shaft 12.

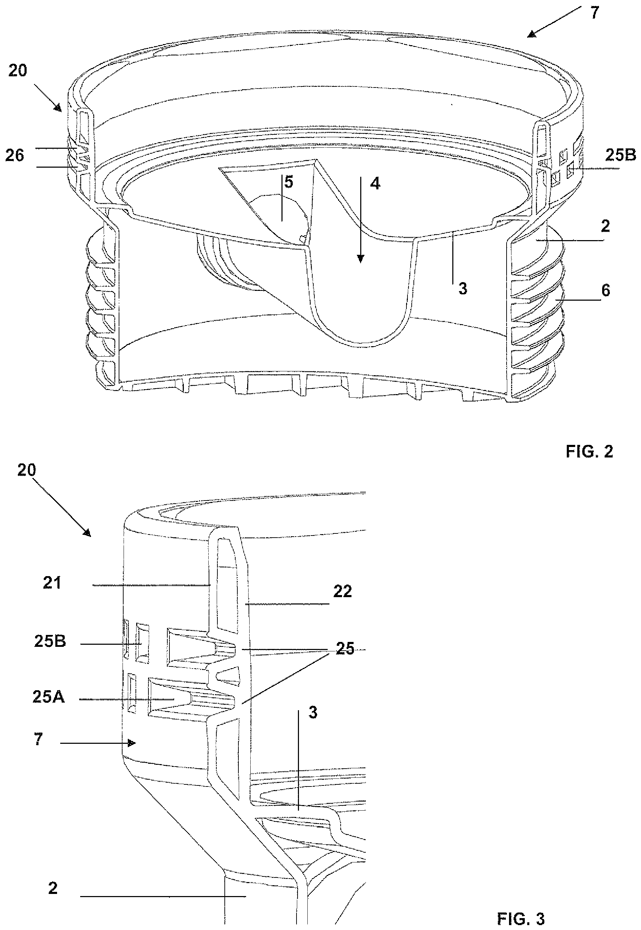

As can be seen best in Figure 2 and 3, the circumferential wall 2 comprises a hollow-walled section 20 at the location of the socket end 7, which extends around the entire drain circumference in the shown case. Each of the previously described inspection chamber portions, i.e. the shaft 12 and/or the transition part 14, can comprise such a hollow-walled section, for example, near a socket or spigot end thereof. Therefore, the following description in more detail of the hollow-walled section 20 of the drain 1 is of analogous application to possible hollow-walled sections in said other inspection chamber portions 12, 14. The same is true in respect of the description of the mould assembly 30 with which such a hollow-walled section can be manufactured.

The hollow-walled section 20 shown in Figure 2 and 3 has an external wall 21 and an internal wall 22, which are locally fused with each other for formation of local reinforcements 25. In the shown example of an embodiment, these reinforcements 25 help especially to prevent deformation of the internal wall 22, so that this internal wall 22 can sealingly abut against a spigot end 8 of the shaft 12 inserted in the socket end 7 and/or a sealing element 9 provided around the spigot end 8, around the entire circumference.

As can be seen in Figure 1, the reinforcements 25 comprise two types in the shown example of an embodiment: relatively elongated reinforcements 25A, which extend with a longitudinal axis in circumferential direction of the drain, and relatively short reinforcements 25B, which are placed alternately between the elongated reinforcements 25. The reinforcements 25A,B are arranged in two rows 26 located above of each other, wherein the short reinforcements 25B are offset with respect to each other, and the elongated reinforcements 25A overlap each other, seen in circumferential direction. By arranging the reinforcements 25 among at least two rows 26, the area along which the circumferential wall 2, especially the socket end 7, is reinforced is enlarged, seen in axial direction. Due to this, the sealing between the socket end 7 and the shaft 12 can be established along a relatively large area, which is especially advantageous when it is not precisely clear in advance where the intended sealing is going to be positioned. For example, this can be the case with shafts 12 having a corrugated wall as shown in Figure 1. Depending on where this shaft is sawed off (in a recession or in a top of the corrugation), the shaft end 8 will reach deeper or less deep in the socket end 7. Naturally, the reinforcements 25 can be arranged in more than two rows 26.

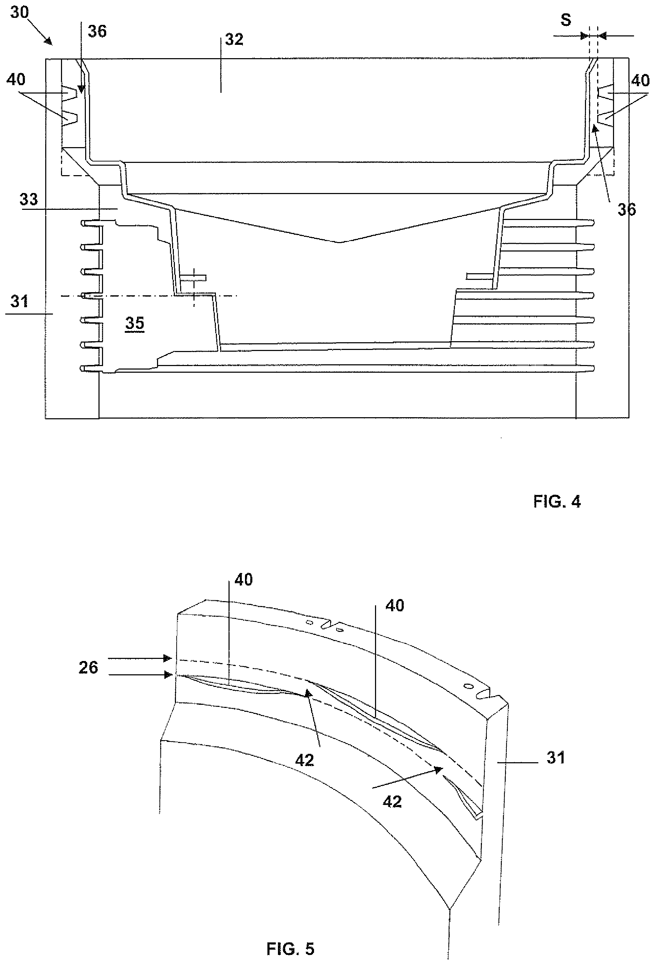

For example, the previously described drain 1 can be manufactured with the help of a mould assembly 30 as shown in Figure 4, by rotation moulding, for example. The shown mould assembly 30 comprises an external mould 31 and an internal mould 32, between which, in assembled condition, a forming or mould cavity 33 is defined, corresponding to the drain 1 to be formed. The forming cavity 33 comprises at least a plug 35 for forming an opening 5 in the circumferential wall 2 of the drain 1. In the portion where the hollow-walled section 20 of the drain 1 is formed, the forming cavity 33 further comprises a number of constrictions 36 for formation of the reinforcements 25. In the shown example of an embodiment, these constrictions are formed by providing the external mould 31 with bulges 40 which reach up unto a short distance S of the internal mould 32. This distance S is smaller than two times the wall thickness of the external and internal wall 21, 22 of the hollow-walled section 20 to be formed. Due to this, said walls 21 will fuse with each other during moulding.

For example, the bulges 40 can be designed as shown in Figure 5, wherein only a part of the external mould 31 is shown. In this variant of an embodiment, all bulges 40 have substantially the same elongated shape. They are arranged in an offset fashion with respect to each other, in two rows located above each other (diagrammatically indicated with discontinuous lines), and such that they jointly cover the entire circumference of the external mould 31, yet do not constitute a continuous, internally closed bulge. Instead, passages 42 are formed between the bulges 40. Plastic can flow along there during the filling of the forming cavity 33, as a result of which the entire cavity 33 can be filled, also parts thereof which are located behind the bulges 40, seen in filling direction.

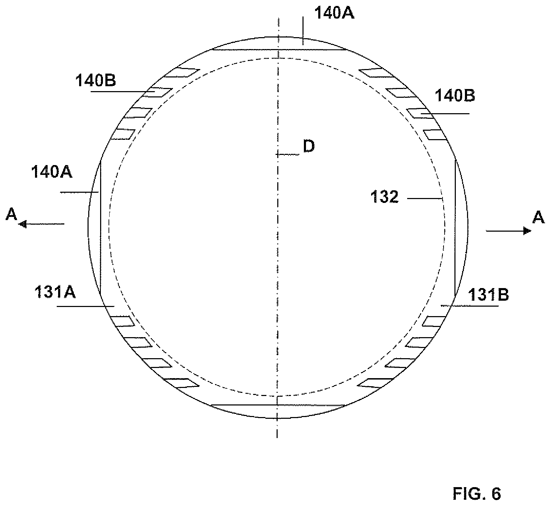

Figure 6 diagrammatically shows, in top view, an alternative embodiment of an external mould 131 and an internal mould 132 according to the invention, for manufacturing the drain 1 shown in the Figures 1-3. In this embodiment, the external mould 131 is provided with relatively elongated bulges 140A for forming the elongated reinforcements 25A, and relatively short bulges 140B for forming the short reinforcements 25B. Again, these bulges 140A,B can be arranged in an offset fashion with respect to each other in two or more rows located above each other, corresponding to the desired reinforcement pattern.

The shown external mould 131 is composed of two halves 131A,B, which can be moved apart in the direction of arrows A, i.e. substantially perpendicular to their interface D. The shape and location of the bulges 140A,B is such that they are capable of releasing in said direction of movement A.

Naturally, other embodiments are possible, wherein the bulges 40, 140 have another shape and/or are arranged differently. In all cases, it is of importance that passages 42 are formed between the bulges 40, 140, through which the entire mould cavity 33 can be filled. Further, it is of importance that the bulges 40 jointly span at least almost the entire length of the hollow-walled section 20, seen in circumferential direction, so that intended section 20 is reinforced along its entire length.

According to an alternative embodiment, the bulges can be arranged on the internal mould (not shown). In such a case, the bulges can be realised as collapsible cores, for example, in order to guarantee the releasability of the internal mould. Such an embodiment can offer advantage when the hollow-walled section 20 is a spigot end, for example. In that case, the external wall 21 of the section 20 can have a substantially smooth shape, and thus sealingly abut against a socket end placed on the spigot end.

The previously described and shown principle is applicable in each mould assembly in which hollow-walled products are formed which need local reinforcement, such as a shaft 12 or transition portion 14 of an inspection chamber, for example.

The invention is not at all limited to the examples of embodiments shown in the description and the drawing. All combinations of (parts of) described and/or shown embodiments are regarded as being covered by the concept of the invention. Moreover, many variations thereto are possible within the framework of the invention sketched by the claims.

## Claims

1. Drain (1) or portion of an inspection chamber (10), comprising a plastic circumferential wall (2), which circumferential wall (2), in the case of the drain (1), is preferably provided with openings (5) for connection of the drain (1) to one or more pipes, wherein the circumferential wall (2) comprises a hollow-walled section (20) provided with an internal wall (22) and an external wall (21), wherein the internal wall (22) and the external wall (21) are locally abutted against each other for formation of reinforcements (25, 25A, 25B),
**characterized in that**
the reinforcements (25, 25A, 25B) are arranged such that they jointly span the entire hollow-walled section (20), in circumferential direction, yet without forming one continuous abutment between the internal wall (22) and the external wall (21).

2. Drain (1) or portion of an inspection chamber (10) according to claim 1, wherein the hollow-walled section (20) extends around the entire circumference of the drain (1) or the inspection chamber (10), respectively.

3. Drain (1) or portion of an inspection chamber (10) according to claim 1 or 2, wherein the circumferential wall (2) comprises a coupling part for coupling of the drain (1) or the inspection chamber portion, respectively, to an external component, for example, a shaft (12), wherein the hollow-walled section (20) extends near or at the location of that coupling part.

4. Drain (1) or portion of an inspection chamber (10) according to claim 3, wherein the coupling part is a socket end (7).

5. Drain (1) or portion of an inspection chamber (10) according to any of the preceding claims, wherein at least the circumferential wall (2) is manufactured by rotation moulding.

6. Drain (1) or portion of an inspection chamber (10) according to any of the preceding claims, wherein the reinforcements (25, 25A, 25B) have mutually different shapes and/or dimensions.

7. Drain (1) or portion of an inspection chamber (10) according to any of the preceding claims, wherein at least one (25A) of the reinforcements (25, 25A, 25B) has an elongated shape, wherein a longitudinal axis of the reinforcement (25A) concerned extends in circumferential direction of the drain (1) or the inspection chamber (10), respectively.

8. Drain (1) or portion of an inspection chamber (10) according to any of the preceding claims, wherein the reinforcements (25, 25A, 25B) are arranged in rows extending along the circumference of the drain (1) or the inspection chamber (10), respectively.

9. Drain (1) or portion of an inspection chamber (10) according to claim 8, wherein the reinforcements (25, 25A, 25B) are offset with respect to each other in adjacent rows.

10. Drain (1) or portion of an inspection chamber (10) according to any of the preceding claims, wherein the reinforcements (25, 25A, 25B) are offset with respect to each other, such that they at least partly overlap each other, seen in circumferential direction.

11. Mould assembly (30) for manufacturing a drain (1) or portion of an inspection chamber (10) according to any of the preceding claims, wherein the mould assembly (30) comprises an external mould (31; 131) and an internal mould (32; 132), which, in assembled condition, define a forming cavity (33) for forming therein the drain (1) or the portion of an inspection chamber (10), wherein, at the location of the hollow-walled section (20) to be formed, the forming cavity (33) is provided with local constrictions (36) where the distance between the external mould (31; 131) and the internal mould (32; 132) is locally so small that an external wall (21) of the hollow-shaped section (20) to be formed, formed on the location against the external mould (32; 132), and an internal wall (22) formed against the internal mould (31; 131), respectively, fuse with each other for formation of a reinforcement (25, 25A, 25B),
**characterized in that**
the constrictions (36) are arranged such in the forming cavity (33) that they jointly span the entire hollow-walled section (20) to be formed, in circumferential direction, yet without forming therewith a continuous constriction between the external mould (31; 131) and the internal mould (32; 132).

12. Mould assembly (30) according to claim 11, wherein the constrictions (36) are formed by providing the external mould (31; 131) and/or the internal mould (32; 132) with bulges (40; 140A, B) at a side facing each other.

13. Mould assembly (30) according to claim 12, wherein the external mould (131) comprises two halves (131A, B), each provided with bulges (140A, B), wherein the halves (131A, B) are movable apart in a direction (A) substantially perpendicular to their interface, and wherein design and location of the bulges (140A, B) is such that they are capable of releasing in said direction (A) of movement of the mould halves (131A, B).

## Patentansprüche

1. Abfluss (1) oder Teil einer Inspektionskammer (10), umfassend eine Kunststoffumfangswand (2), wobei die Umfangswand (2) in dem Falle des Abflusses (1) vorzugsweise mit Öffnungen (5) für die Verbindung des Abflusses (1) mit einem oder mehreren Rohren bereitgestellt ist, wobei die Umfangswand (2) einen hohlwandigen Abschnitt (20) umfasst, der mit einer Innenwand (22) und einer Außenwand (21) bereitgestellt ist, wobei die Innenwand (22) und die Außenwand (21) zur Formung von Verstärkungen (25, 25A, 25B) lokal aneinander anliegen,
**dadurch gekennzeichnet, dass**
die Verstärkungen (25, 25A, 25B) derart angeordnet sind, dass sie gemeinsam den gesamten hohlwandigen Abschnitt (20) in Umfangsrichtung überspannen, ohne jedoch eine durchgehende Anlagefläche zwischen der Innenwand (22) und der Außenwand (21) zu bilden.

2. Abfluss (1) oder Teil einer Inspektionskammer (10) nach Anspruch 1, wobei sich der hohlwandige Abschnitt (20) um den gesamten Umfang des Abflusses (1) bzw. der Inspektionskammer (10) erstreckt.

3. Abfluss (1) oder Teil einer Inspektionskammer (10) nach Anspruch 1 oder 2, wobei die Umfangswand (2) ein Kopplungsstück zum Koppeln des Abflusses (1) bzw. des Inspektionskammerteils mit einer externen Komponente umfasst, zum Beispiel einer Welle (12), wobei sich der hohlwandige Abschnitt (20) nahe oder an der Stelle des Kopplungsstücks erstreckt.

4. Abfluss (1) oder Teil einer Inspektionskammer (10) nach Anspruch 3, wobei das Kopplungsstück ein Rohrmuffenende (7) ist.

5. Abfluss (1) oder Teil einer Inspektionskammer (10) nach einem der vorstehenden Ansprüche, wobei mindestens die Umfangswand (2) durch Rotationsformen hergestellt wird.

6. Abfluss (1) oder Teil einer Inspektionskammer (10) nach einem der vorstehenden Ansprüche, wobei die Verstärkungen (25, 25A, 25B) voneinander unterschiedliche Formen und/oder Abmessungen aufweisen.

7. Abfluss (1) oder Teil einer Inspektionskammer (10) nach einem der vorstehenden Ansprüche, wobei mindestens eine (25A) der Verstärkungen (25, 25A, 25B) eine längliche Form aufweist, wobei sich eine Längsachse der betreffenden Verstärkung (25A) in Umfangsrichtung des Abflusses (1) bzw. der Inspektionskammer (10) erstreckt.

8. Abfluss (1) oder Teil einer Inspektionskammer (10) nach einem der vorstehenden Ansprüche, wobei die Verstärkungen (25, 25A, 25B) in Reihen angeordnet sind, die sich entlang des Umfangs des Abflusses (1) bzw. der Inspektionskammer (10) erstrecken.

9. Abfluss (1) oder Teil einer Inspektionskammer (10) nach Anspruch 8, wobei die Verstärkungen (25, 25A, 25B) in benachbarten Reihen voneinander versetzt sind.

10. Abfluss (1) oder Teil einer Inspektionskammer (10) nach einem der vorstehenden Ansprüche, wobei die Verstärkungen (25, 25A, 25B) voneinander versetzt sind, sodass sie sich mindestens teilweise, in Umfangsrichtung gesehen, überschneiden.

11. Formanordnung (30) zum Herstellen eines Abflusses (1) oder eines Teils einer Inspektionskammer (10) nach einem der vorstehenden Ansprüche, wobei die Formanordnung (30) eine Außenform (31; 131) und eine Innenform (32; 132) umfasst, die in dem zusammengebauten Zustand einen Formhohlraum (33) zum Formen des Abflusses (1) oder des Teils einer Inspektionskammer (10) darin definieren, wobei an der Stelle des zu formenden hohlwandigen Abschnitts (20) der Formhohlraum (33) mit lokalen Einschnürungen (36) bereitgestellt ist, bei denen der Abstand zwischen der Außenform (31; 131) und der Innenform (32; 132) lokal so klein ist, dass eine Außenwand (21) des zu formenden hohlförmigen Abschnitts (20), die an der Stelle an der Außenform (32; 132) geformt wird, bzw. eine Innenwand (22), die an der Innenform (31; 131) geformt wird, miteinander verschmelzen, um eine Verstärkung (25, 25A, 25B) zu formen,
**dadurch gekennzeichnet, dass**
die Einschnürungen (36) derart in dem Formhohlraum (33) angeordnet sind, dass sie gemeinsam den gesamten zu formenden hohlwandigen Abschnitt (20) in Umfangsrichtung überspannen, ohne jedoch damit eine durchgehende Einschnürung zwischen der Außenform (31; 131) und der Innenform (32; 132) zu formen.

12. Formanordnung (30) nach Anspruch 11, wobei die Einschnürungen (36) durch Bereitstellen der Außenform (31; 131) und/oder der Innenform (32; 132) mit Ausbuchtungen (40; 140A, B) auf einer einander zugewandten Seite geformt sind.

13. Formanordnung (30) nach Anspruch 12, wobei die Außenform (131) zwei Hälften (131A, B) umfasst, die jeweils mit Ausbuchtungen (140A, B) bereitgestellt sind, wobei die Hälften (131A, B) in einer Richtung (A) in dem Wesentlichen senkrecht zu ihrer Grenzfläche auseinander beweglich sind, und wobei die Ausgestaltung und die Stelle der Ausbuchtungen (140A, B) derart sind, dass sie in der Richtung (A) der Bewegung der Formhälften (131A, B) freigegeben werden können.

## Revendications

1. Canalisation d'évacuation (1) ou portion d'une chambre de visite (10), comprenant une paroi circonférentielle en plastique (2), laquelle paroi circonférentielle (2), dans le cas de la canalisation d'évacuation (1), est de préférence munie d'ouvertures (5) pour le raccordement de la canalisation d'évacuation (1) à un ou plusieurs tuyaux, dans laquelle la paroi circonférentielle (2) comprend une section à parois creuses (20) munie d'une paroi interne (22) et d'une paroi externe (21), dans laquelle la paroi interne (22) et la paroi externe (21) sont localement mises en butée l'une contre l'autre pour la formation d'armatures (25, 25A, 25B),
**caractérisée en ce que**
les armatures (25, 25A, 25B) sont agencées de telle sorte qu'elles couvrent conjointement toute la section à parois creuses (20), dans la direction circonférentielle, mais sans former une butée continue unique entre la paroi interne (22) et la paroi externe (21).

2. Canalisation d'évacuation (1) ou portion d'une chambre de visite (10) selon la revendication 1, dans laquelle la section à parois creuses (20) s'étend autour de toute la circonférence de la canalisation d'évacuation (1) ou de la chambre de visite (10), respectivement.

3. Canalisation d'évacuation (1) ou portion d'une chambre de visite (10) selon la revendication 1 ou 2, dans laquelle la paroi circonférentielle (2) comprend une pièce de couplage pour le couplage de la canalisation d'évacuation (1) ou de la portion de chambre de visite, respectivement, à un composant externe, par exemple, une tige (12), dans laquelle la section à parois creuses (20) s'étend à proximité de ou au niveau de l'emplacement de cette pièce de couplage.

4. Canalisation d'évacuation (1) ou portion d'une chambre de visite (10) selon la revendication 3, dans laquelle la pièce de couplage est une emboiture (7).

5. Canalisation d'évacuation (1) ou portion d'une chambre de visite (10) selon l'une quelconque des revendications précédentes, dans laquelle au moins la paroi circonférentielle (2) est fabriquée par moulage par rotation.

6. Canalisation d'évacuation (1) ou portion d'une chambre de visite (10) selon l'une quelconque des revendications précédentes, dans laquelle les armatures (25, 25A, 25B) ont des formes et/ou dimensions mutuellement différentes.

7. Canalisation d'évacuation (1) ou portion d'une chambre de visite (10) selon l'une quelconque des revendications précédentes, dans laquelle au moins une (25A) des armatures (25, 25A, 25B) a une forme allongée, dans laquelle un axe longitudinal de l'armature (25A) concernée s'étend dans la direction circonférentielle de la canalisation d'évacuation (1) ou de la chambre de visite (10), respectivement.

8. Canalisation d'évacuation (1) ou portion d'une chambre de visite (10) selon l'une quelconque des revendications précédentes, dans laquelle les armatures (25, 25A, 25B) sont agencées en rangées s'étendant le long de la circonférence de la canalisation d'évacuation (1) ou de la chambre de visite (10), respectivement.

9. Canalisation d'évacuation (1) ou portion d'une chambre de visite (10) selon la revendication 8, dans laquelle les armatures (25, 25A, 25B) sont décalées les unes par rapport aux autres en rangées adjacentes.

10. Canalisation d'évacuation (1) ou portion d'une chambre de visite (10) selon l'une quelconque des revendications précédentes, dans laquelle les armatures (25, 25A, 25B) sont décalées les unes par rapport aux autres, de telle sorte qu'elles se chevauchent au moins partiellement, vues dans la direction circonférentielle.

11. Ensemble moule (30) pour fabriquer une canalisation d'évacuation (1) ou portion d'une chambre de visite (10) selon l'une quelconque des revendications précédentes, dans lequel l'ensemble moule (30) comprend un moule externe (31; 131) et un moule interne (32 ; 132), qui, à l'état assemblé, définissent une cavité de formation (33) pour former à l'intérieur de celle-ci la canalisation d'évacuation (1) ou la portion d'une chambre de visite (10), dans lequel, au niveau de l'emplacement de la section à parois creuses (20) à former, la cavité de formation (33) est munie de rétrécissements locaux (36) où la distance entre le moule externe (31 ; 131) et le moule interne (32 ; 132) est localement tellement faible qu'une paroi externe (21) de la section à parois creuses (20) à former, formée sur l'emplacement contre le moule externe (32 ; 132), et une paroi interne (22) formée contre le moule interne (31 ; 131), respectivement, fusionnent l'une avec l'autre pour former une armature (25, 25A, 25B),
**caractérisé en ce que**
les rétrécissements (36) sont agencés dans la cavité de formation (33) de telle sorte qu'ils couvrent conjointement toute la section à parois creuses (20) à former, dans la direction circonférentielle, mais sans former avec celle-ci un rétrécissement continu entre le moule externe (31 ; 131) et le moule interne (32 ; 132).

12. Ensemble moule (30) selon la revendication 11, dans lequel les rétrécissements (36) sont formés en munissant le moule externe (31 ; 131) et/ou le moule interne (32 ; 132) de renflements (40 ; 140A, B) au niveau d'un côté se faisant mutuellement face.

13. Ensemble moule (30) selon la revendication 12, dans lequel le moule externe (131) comprend deux moitiés (131A, B), chacune munie de renflements (140A, B), dans lequel les moitiés (131A, B) peuvent être écartées l'une de l'autre dans une direction (A) sensiblement perpendiculaire à leur interface, et dans lequel la conception et l'emplacement des renflements (140A, B) sont tels qu'ils sont capables d'un déblocage dans ladite direction (A) de mouvement des moitiés de moule (131A, B).
